# EUROPÄISCHE PATENTSCHRIFT

(11) **EP 3 017 538 B1**
(45) Veröffentlichungstag und Bekanntmachung des Hinweises auf die Patenterteilung: **29.11.2017**
(21) Anmeldenummer: 14734484.0
(22) Anmeldetag: 02.07.2014
(51) Int. Cl.: H02P 29/02, H02P 21/00, B60L 3/00, H02P 3/14

(54) **VERFAHREN ZUR ANSTEUERUNG EINES MEHRPHASIGEN FREQUENZUMRICHTERS ZUR ANSTEUERUNG EINER ELEKTROMASCHINE UND ZUGEHÖRIGES STEUERGERÄT**
METHOD FOR CONTROLLING A MULTIPHASE FREQUENCY CONVERTER OF DRIVING AN ELECTRIC MACHINE AND CORRESPONDING CONTROLLER
PROCÉDÉ DE COMMANDE D'UN CONVERTISSEUR DE FRÉQUENCE MULTI PHASE DE PILOTAGE D'UNE MACHINE ÉLECTRIQUE ET APPAREIL DE COMMANDE CORRESPONDANT

(30) Priorität: 04.07.2013 DE 102013213044
(43) Veröffentlichungstag der Anmeldung: 11.05.2016
(73) Patentinhaber: Voith Patent GmbH, 89522 Heidenheim (DE)
(72) Erfinder: LAUTER, Bernd, 89567 Sontheim an der Brenz (DE); GLONING, Johannes, 73479 Ellwangen (DE)
(86) Internationale Anmeldenummer: PCT/EP2014/064011
(87) Internationale Veröffentlichungsnummer: WO 2015/000930

(56) Entgegenhaltungen:
- EP-A1- 1 248 342
- DE-A1-102006 003 254
- DE-A1-102007 020 509
- DE-A1-102011 075 789
- DE-A1-102011 081 173
- DE-A1-102012 002 023

## Beschreibung

### GEBIET DER ERFINDUNG

Die vorliegende Erfindung betrifft ein Verfahren zur Ansteuerung eines mehrphasigen Frequenzumrichters zur Ansteuerung einer Elektromaschine, eine Steuerungseinheit und ein Fahrzeug.

### HINTERGRUND DER ERFINDUNG

Im Stand der Technik sind permanentmagneterregte Synchronmaschinen bekannt, die zum Antrieb von Fahrzeugen verwendet Als Beispiele werden dazu DE 10 2011 075789 A1, DE10 2006 003254 A1, EP 1 248 342 A1, DE 10 2011 081173 A1, DE 10 2012 002023 A1 oder auch DE 10 2007 020509 A1 genannt.

### ZUSAMMENFASSUNG DER ERFINDUNG

Permanentmagneterregte Elektromaschinen als Traktionsantriebe eines Elektro- oder Hybridfahrzeugs können meist nicht von der Antriebsachse, dem Rad bzw. den Rädern mechanisch ausgekuppelt werden. Eine Eigenschaft von permanentmagneterregten Elektromaschinen ist es, dass diese eine zur Maschinendrehzahl proportionale Spannung erzeugen. Steigt diese Spannung über die aktuelle Zwischenkreisspannung und die Durchlassspannung der Dioden der Leistungsschalter (bzw. der Bodydioden der Mosfets) an, kommt es zu einem Rückspeisen. Durch das Rückspeisen besteht die Gefahr, dass die Gleichspannungsquelle durch Überladung oder der Frequenzumrichter durch Überstrom beschädigt wird. Außerdem ergibt sich durch das Rückspeisen ein unerwünschtes, der Drehrichtung der Maschinenwelle entgegengesetztes, Bremsdrehmoment. Zur Vermeidung dieser Problematik kann die Elektromaschine in einen Freilaufmodus bzw. einen Kurzschlussmodus überführt werden. Allerdings ist dabei zu berücksichtigen, dass bei niedrigen Drehzahlen eine kurzgeschlossene permanenterregte Elektromaschine ein hohes Bremsdrehmoment generieren kann. Im Freilauffall hingegen kann bei hohen Drehzahlen ein hohes Bremsdrehmoment generiert werden. Es ist daher entsprechend der Situation zwischen dem Freilaufmodus und dem Kurzschlussmodus umzuschalten. Die Maschinendrehzahl als Maßgabe in welchen Modus zu schalten ist (Kurzschlussmodus oder Freilaufmodus) kann nicht als alleiniges Kriterium herangezogen werden, da die Aussagekraft dieses Kriteriums durch zusätzliche Parameter beeinflusst wird. Die kritische Maschinendrehzahl, als Wert der Maschinendrehzahl bei der ein Umschalten des Frequenzumrichters erfolgen sollte, ist beispielsweise vom aktuellen Niveau der zur Verfügung stehenden Gleichspannung am Frequenzumrichter (Zwischenkreisspannung) abhängig. Je niedriger die Zwischenkreisspannung, umso niedriger ist die betragsmäßige Drehzahl/Maschinendrehzahl, ab der im ungesteuerten Betrieb ein Rückspeisen erfolgt. Außerdem spielt die Temperatur der Permanentmagnete, welche am Rotor der Elektromaschine angeordnet sind, eine bedeutende Rolle. Deren Magnetfeldstärke nimmt mit steigender Temperatur ab, weswegen bei gleicher Drehzahl ein kalter Rotor wesentlich mehr Spannung induziert als ein warmer Rotor. Durch die Temperatur der Statorwicklung verändert sich der Statorwiderstand, wodurch sich ebenfalls ein Einfluss auf die Drehzahlschwelle ergibt. Insbesondere die Rotortemperatur bzw. die Magnetfeldstärke der Permanentmagnete sind nur mit einem hohen technischen Aufwand messbar.

Eine Aufgabe ist daher, ein Verfahren für eine Elektromaschine zur Verfügung zu stellen, das ein Umschalten in einen Kurzschlussmodus bzw. einen Freilaufmodus bei gegebenen Voraussetzungen erlaubt, wobei hierzu ein einfacher bzw. eindeutiger Entscheidungsprozess bereitgestellt werden soll. Hierbei soll insbesondere ein Verfahren beschrieben werden, das keine Messung der Zwischenkreisspannung und/oder der Rotortemperatur und/oder der Statortemperatur erfordert, um diese Aufgabe zu erfüllen.

Als erste Ausführungsform der Erfindung wird ein Verfahren zur Ansteuerung eines mehrphasigen Frequenzumrichters zur Ansteuerung einer Elektromaschine gemäss Anspruch 1 zur Verfügung gestellt.

Durch das Verwenden der Phasenstrangströme bzw. der Rotorlageposition zur Entscheidung über den geeigneten Modus (Freilaufmodus, Kurzschlussmodus) einer Elektromaschine während eines Störfalls kann auf die Drehzahl als nicht eindeutiges Kriterium verzichtet werden und es ist nicht notwendig, zusätzliche Messungen vorzunehmen, da die Phasenstrangströme und die Rotorlageposition bekannt ist.

Als zweite Ausführungsform der Erfindung wird eine Steuerungseinheit zur Verfügung gestellt, um ein Verfahren nach einem der Ansprüche 1 bis 9 auszuführen.

Als dritte Ausführungsform der Erfindung wird ein Fahrzeug zur Verfügung gestellt, aufweisend eine Steuerungseinheit nach Anspruch 11 Beispielhafte Ausfiihrungsformen werden in den abhängigen Ansprüchen beschrieben.

Gemäß der Erfindung wird ein Verfahren zur Verfügung gestellt, ferner umfassend den Schritt: mathematische Transformation der Phasenstrangströme in ein zweidimensionales Koordinatensystem mit orthogonal aufeinander stehenden Stromkomponenten und/oder wobei das Koordinatensystem ein läuferorientiertes Koordinatensystem ist.

Durch eine Transformation in ein läuferorientiertes Koordinatensystem können vereinfachte Verhältnisse geschaffen werden, wodurch der Entscheidungsprozess, in welchen Modus der Frequenzumrichter zu schalten ist, vereinfacht werden kann.

In der erfindungsgemäßen Ausführungsform wird ein Verfahren zur Verfügung gestellt, ferner umfassend die Schritte: falls die Stromkomponenten innerhalb eines Toleranzbereichs liegen: überführen der Endstufe in einen Freilaufmodus, falls die Stromkomponenten außerhalb des Toleranzbereichs liegen: falls das Steuersignal aktiv ist: falls die Stromkomponenten außerhalb eines ersten Bereichs liegen: überführen des Frequenzumrichters in den Freilaufmodus.

Gemäß der vorliegenden Erfindung wird ein Verfahren zur Verfügung gestellt, ferner umfassend die Schritte: falls die Stromkomponenten außerhalb des Toleranzbereichs liegen: falls das Steuersignal nicht aktiv ist: überführen des Frequenzumrichters in den Kurzschlussmodus, falls die Stromkomponenten außerhalb des Toleranzbereichs liegen: falls das Steuersignal aktiv ist: falls die Stromkomponenten innerhalb eines ersten Bereichs liegen: überführen des Frequenzumrichters in den Kurzschlussmodus.

Gemäß einer beispielhaften Ausführungsform der Erfindung wird ein Verfahren zur Verfügung gestellt, wobei der Toleranzbereich derjenige Bereich ist, in dem für die Stromkomponenten gilt: i_{q}² + i_{d}² = erster Wert, und/oder wobei der erste Bereich derjenige Bereich ist, in dem für die Stromkomponenten gilt: i_{d} < 0 und (i_{q} <= |zweiter Wert • i_{d}| und i_{q} >= dritter Wert • i_{d}) und/oder wobei der erste Wert, der zweite Wert und der dritte Wert beliebige gleiche oder unterschiedliche numerische Werte sind und/oder wobei die Bestimmung, ob die Stromkomponenten innerhalb des ersten Bereichs liegen durch Berechnung eines Stromwinkel der Stromkomponenten und/oder durch die Berechnung eines Stromverhältnisses der Stromkomponenten erfolgt.

In einer weiteren erfindungsgemäßen Ausführungsform wird ein Verfahren zur Verfügung gestellt, ferner umfassend die Schritte: falls die Stromkomponenten außerhalb des Toleranzbereichs liegen: überführen des Frequenzumrichters in den Kurzschlussmodus, falls die Stromkomponenten innerhalb des Toleranzbereichs liegen: belassen des Frequenzumrichters im Freilaufmodus.

Gemäß einem weiteren Ausführungsbeispiel der vorliegenden Erfindung wird ein Verfahren zur Verfügung gestellt, wobei: falls die Stromkomponenten innerhalb eines zweiten Bereichs liegen: belassen des Frequenzumrichters im Kurzschlussmodus, falls die Stromkomponenten außerhalb des zweiten Bereichs liegen: überführen des Frequenzumrichters in den Freischaltmodus.

Gemäß einer beispielhaften Ausführungsform der Erfindung wird ein Verfahren zur Verfügung gestellt, wobei der zweite Bereich derjenige Bereich ist, in dem für die Stromkomponenten gilt: i_{d} < 0 und (i_{q} <= 0 und i_{q} >= vierter Wert • i_{d}), wobei der vierte Wert ein beliebiger numerischer Wert ist und/oder wobei der zweite Bereich durch Berechnung eines Stromwinkels der Stromkomponenten und/oder durch die Berechnung eines Stromverhältnisses der Stromkomponenten erfolgt.

Gemäß einer beispielhaften Ausführungsform der Erfindung wird ein Verfahren zur Verfügung gestellt, wobei im Freilaufmodus sämtliche ersten und sämtliche zweiten Leistungsschalter geöffnet sind.

In einer weiteren erfindungsgemäßen Ausführungsform wird ein Verfahren zur Verfügung gestellt, wobei im Kurzschlussmodus sämtliche ersten Leistungsschalter geöffnet sind und sämtliche zweiten Leistungsschalter geschlossen sind oder wobei sämtliche ersten Leistungsschalter geschlossen sind und sämtliche zweiten Leistungsschalter geöffnet sind oder wobei jeweils ein Leistungsschalter je Phase kurzgeschlossen ist.

Durch das Ansteuern der Leistungsschalter des Frequenzumrichters kann auf einfache Weise ein Kurzschlussmodus bzw. ein Freilaufmodus realisiert werden.

Gemäß einem weiteren Ausführungsbeispiel der vorliegenden Erfindung wird ein Verfahren zur Verfügung gestellt, wobei eine Überwachungseinheit den Frequenzumrichter in den Freilaufmodus und/oder in den Kurzschlussmodus überführt.

Als eine Idee der Erfindung kann angesehen werden, nach einer Transformation in ein läuferorientiertes Koordinatensystem Bedingungen zu definieren, die einen sicheren Betrieb einer Elektromaschine erlauben. Insbesondere soll hiermit bestimmt werden, wann nötigenfalls die Elektromaschine in einen Kurzschlussmodus oder in einen Freilaufmodus geschaltet werden kann.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 eine Endstufe/ein Wechselrichter/ein Frequenzumrichter zur Ansteuerung einer permanentmagneterregten Synchronmaschine,
Fig. 2 eine Darstellung des erzeugten Bremsdrehmoments eines Wechselrichters bei einer Drehzahländerung (Drehzahl-Drehmomentverlauf einer ungesteuerten permanentmagneterregten Elektromaschine im Kurzschlussmodus bzw. im Freilaufmodus, wobei über die Maschinenwelle eine Drehzahl eingeprägt ist),
Fig. 3 ein System zur Steuerung und Überwachung des Frequenzumrichters und der Elektromaschine,
Fig. 4 ein Flussdiagramm eines erfindungsgemäßen Verfahrens,
Fig. 5 ein läuferorientierte Koordinatensystem,
Fig. 6 zeigt einen Kurvenverlauf einer Synchronmaschine im Kurzschlussmodus bei einer Statortemperatur von 20° Celsius und einer Rotortemperatur von 20° Celsius,
Fig. 7 zeigt einen Kurvenverlauf einer Synchronmaschine im Kurzschlussmodus bei einer Statortemperatur von 20° Celsius und einer Rotortemperatur von 150° Celsius,
Fig. 8 zeigt einen Kurvenverlauf einer Synchronmaschine im Kurzschlussmodus bei einer Statortemperatur von 150° Celsius und einer Rotortemperatur von 20° Celsius,
Fig. 9 zeigt einen Kurvenverlauf einer Synchronmaschine im Kurzschlussmodus bei einer Statortemperatur von 150° Celsius und einer Rotortemperatur von 150° Celsius.

### DETAILLIERTE BESCHREIBUNG BEISPIELHAFTER AUSFÜHRUNGSFORMEN

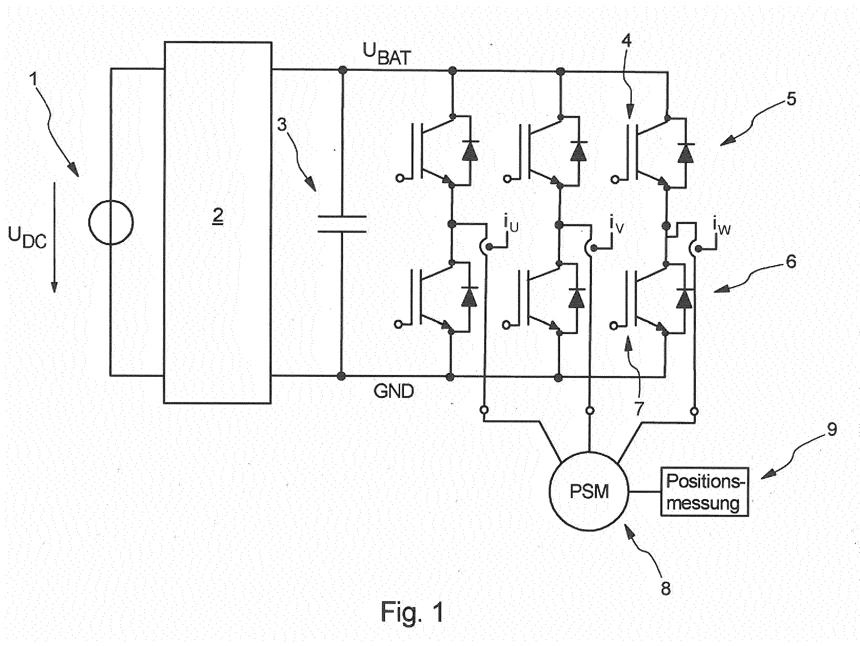

Fig. 1 zeigt eine Endstufe/einen Wechselrichter/einen Frequenzumrichter zur Ansteuerung einer permanentmagneterregten Synchronmaschine. Der Wechselrichter weist drei Halbbrücken/Leistungspfade mit jeweils einem Highside-Leistungsschalter 4 und einem Lowside-Leistungsschalter 7 auf. An den Knotenpunkten der Halbbrücken sind die Phasenstränge der Elektromaschine 8 angeordnet. An den Leistungsschaltern 4, 7 sind Dioden/Bodydioden 5, 6 angeordnet/ausgebildet.

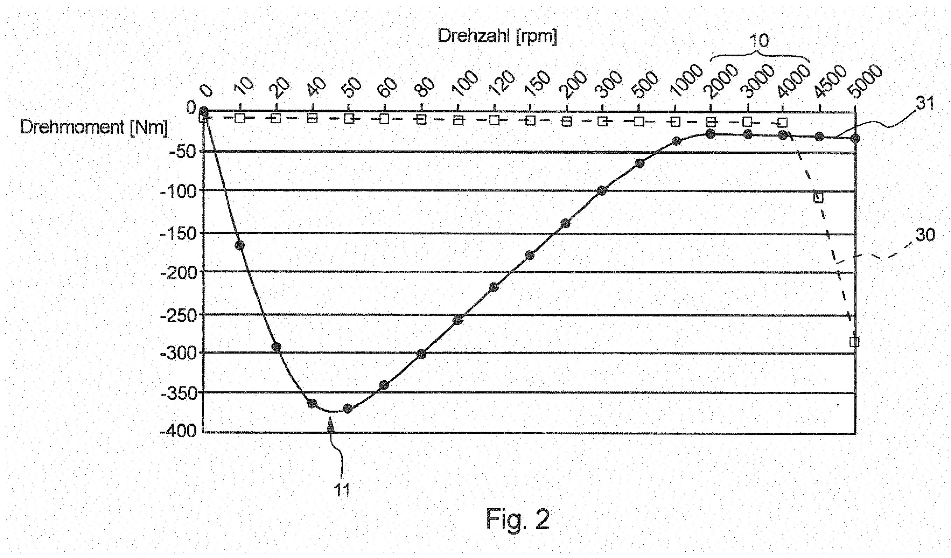

Fig. 2 zeigt zwei Kurven bei unterschiedlichen Betriebszuständen einer permanentmagneterregten Synchronmaschine. In einer ersten Kurve 31 ist dargestellt, welches Bremsdrehmoment im Kurzschlussmodus erzeugt wird. Hierbei kann abgelesen werden, dass bei geringen Drehzahlen hohe Bremsdrehmomente generiert werden. Es kann ein Maximum 11 festgestellt werden, bei dem das betragsmäßig höchste Drehmoment generiert wird. Bei hohen Drehzahlen wird im Kurzschlussmodus ein nur geringes Drehmoment erzeugt. Im Gegensatz dazu werden bei niedrigen Drehzahlen im Freilaufmodus nur geringe Drehmomente erzeugt (siehe Kurve 30). Bei hohen Drehzahlen, nimmt das Drehmoment betragsmäßig zu. Es kann dabei ein Übergang 10 festgestellt werden, bis zu dem, bei zunehmender Drehzahl, es vorteilhaft ist, die Synchronmaschine im Freilaufmodus 30 zu betreiben, um ein nur geringes Bremsdrehmoment zu erhalten. Nach dem Übergangsbereich 10 ist es besser, die Synchronmaschine in den Kurzschlussmodus 31 zu schalten, um das Bremsdrehmoment klein zu halten.

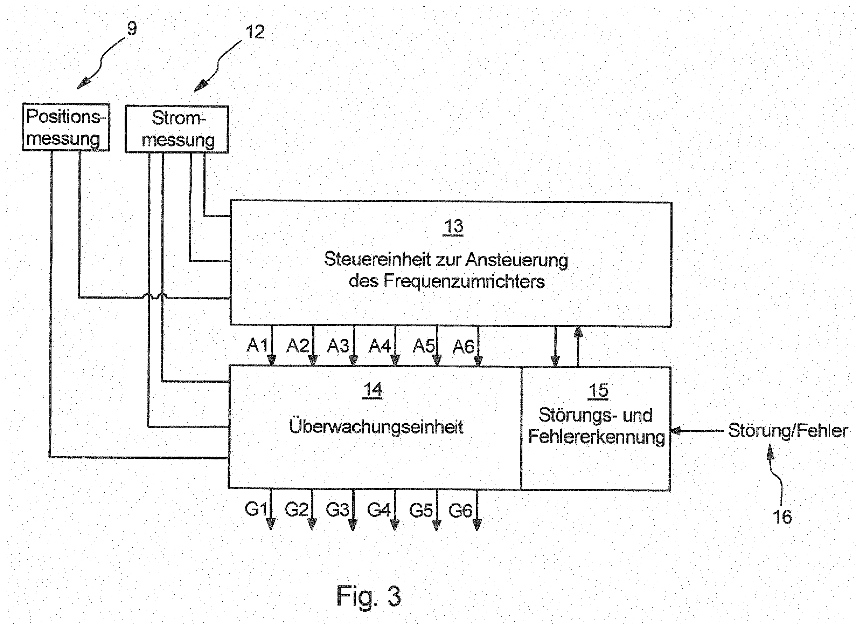

Fig. 3 zeigt ein System zur Steuerung und Überwachung des Frequenzumrichters und der Elektromaschine. Das System umfasst eine Positionsmessung 9 mit der die Lage/Position des Rotors der Elektromaschine/Synchronmaschine bestimmt werden kann. Durch eine Strommessung 12 können die Strangströme i_{U}, i_{V}, i_{W} bestimmt werden. Außerdem umfasst das System eine Steuereinheit zur Ansteuerung des Frequenzumrichters 13 und eine Störungs- und Fehlererkennung 15. Die Störungs-und Fehlererkennung 15 reagiert sowohl auf das externe Störungs-/Fehlersignal 16 als auch auf, von der Überwachungseinheit 14 erkannte Störungen/Fehler. Die Überwachungseinheit 14 sorgt für die Koordination der einzelnen Elemente des Systems. Erhält das System eine Fehlermeldung 16 wird erfindungsgemäß die Situation gemäß den aktuellen Maschinenströmen und dem Lagesignal des Rotors beurteilt anstatt, wie im Stand der Technik, durch Drehzahl, Zwischenkreisspannung, Rotortemperatur und/oder Statortemperatur bzw. weiteren physikalischen Größen. Vorteilhafterweise können daher erfindungsgemäß die bereits vorhandenen Messgrößen genutzt werden und es müssen keine zusätzlichen Messungen vorgenommen werden.

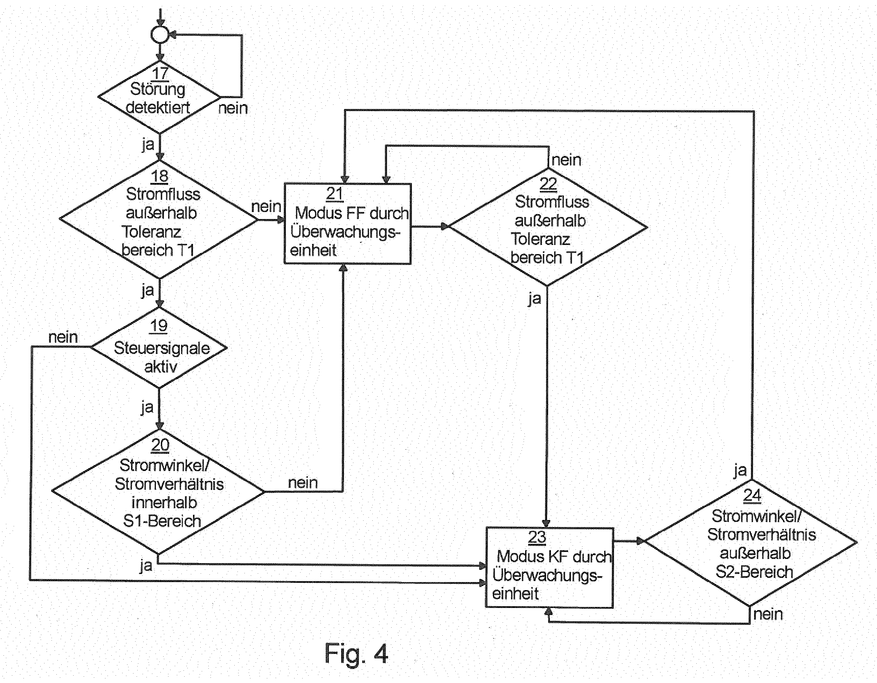

Fig. 4 zeigt ein Flussdiagramm eines erfindungsgemäßen Verfahrens. Zunächst wird festgestellt, ob ein Störfall vorliegt 17. Falls ja, wird geprüft, ob der vorliegende Stromfluss innerhalb eines Bereichs liegt, der toleriert werden kann 18. In diesem Bereich T1 liegen nur Ströme vor, die sehr klein sind und daher keine wesentliche Problematik darstellen. Falls ja, kann der Wechselrichter/Frequenzumrichter in den Freilaufmodus überführt werden 21. Im Freilaufmodus wird überprüft, ob weiterhin nur kleine Ströme, die dem Toleranzbereich T1 entsprechen, vorliegen 22. Falls ja, bleibt der Wechselrichter im Freilaufmodus 21. Falls nein, wird der Wechselrichter in den Kurzschlussmodus überführt 23. Ist nach Erkennen eines Störfalls 17 und feststellen, dass der Stromfluss nicht unwesentlich ist, da dieser sich nicht innerhalb des Toleranzbereichs T1 befindet 18, außerdem feststellbar, dass Steuersignale des Wechselrichters vorliegen 19, so kann konstatiert werden, dass die Ansteuerung des Wechselrichters noch korrekt ablaufen kann. Ist dagegen feststellbar, dass keine aktiven Steuersignale vorliegen 19, wird der Wechselrichter in den Kurzschlussmodus überführt 23. Liegen aktive Steuersignale vor, so wird überprüft, ob die permanenterregte Synchronmaschine aktiv durch den Umrichter feldgeschwächt wird 20. Dies ist der Fall, falls die transformierten Ströme i_{q}, i_{d} innerhalb des Bereichs S1 liegen 20. Falls dies gegeben ist, wird der Wechselrichter in den Kurzschlussmodus geschaltet 23, um eine Beschädigung des Systems durch rückgespeiste Ströme aus der Elektromaschine oder ein unerwünschtes Drehmoment entgegen der Drehrichtung zu vermeiden. Liegen die transformierten Werte i_{q}, i_{d} nicht innerhalb des Bereichs S1 20, sondern noch auf der Kennlinie K_mot, so wird die Elektromaschine nicht aktiv feldgeschwächt und der Wechselrichter kann in den Freilaufmodus geschaltet werden 21.

Ist der Wechselrichter im Kurzschlussmodus muss überprüft werden, ob er ein hohes Drehmoment generiert. Falls ja, kann dies zu einer Unfallgefahr führen. Hierzu wird geprüft, ob der Stromwinkel/das Stromverhältnis außerhalb des Bereichs S2 liegt 24. Falls ja, erzeugt die Elektromaschine ein hohes Drehmoment und der Wechselrichter muss in den Freilaufmodus geschaltet werden 21. Ergibt die Berechnung des Stromwinkels/des Stromverhältnisses, dass diese Werte noch innerhalb des Bereichs S2 liegen 24, so erzeugt die Elektromaschine kein großes Drehmoment und kann im Kurzschlussmodus gehalten werden 23.

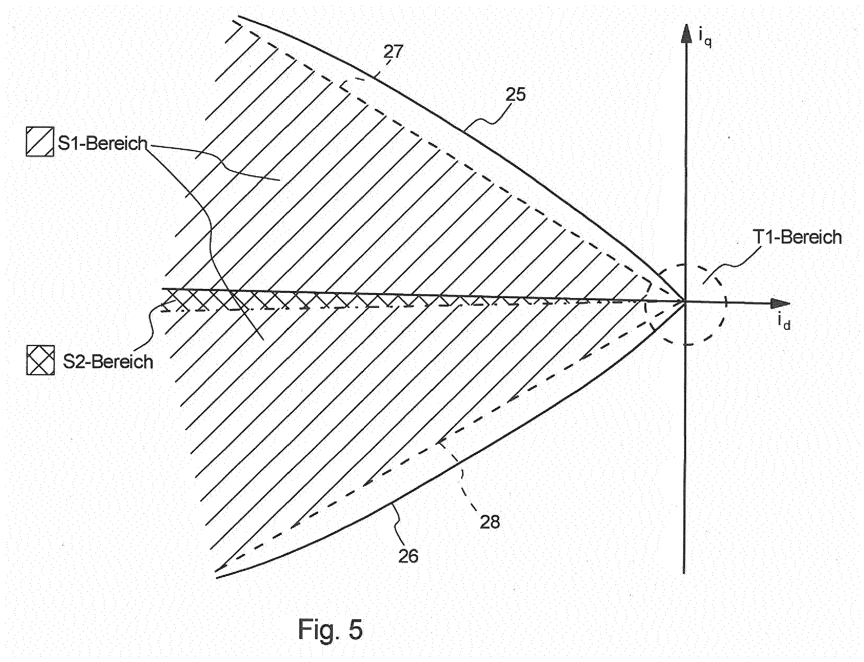

Fig. 5 zeigt das läuferorientierte Koordinatensystem mit d- und q-Achsen. Dargestellt sind die Kennlinien K_mot 25 (mot steht für den motorischen Betrieb) und K_gen 26 (gen steht für den generatorischen Betrieb). Werden diese Kennlinien K_mot 25 bzw. K_gen 26 verlassen, so befindet sich die Elektromaschine im Zustand der Feldschwächung und ein unerwünschtes Rückspeisen würde im Freilauffall erfolgen. Als Grenzwert, ob bereits eine bedeutende Feldschwächung vorliegt, können die Strecken/Kurven 27, 28 berechnet werden. Befindet sich die Elektromaschine bezüglich ihres Betriebszustands innerhalb des von den Kurven 27, 28 aufgespannten Bereichs S1, so kann von einer bedeutenden Feldschwächung ausgegangen werden. Hierbei können noch zwei Ausnahmesituationen bestimmt werden. Liegen noch geringe Ströme vor, so kann von einem unkritischen Betriebszustand ausgegangen werden, T1-Bereich. In diesem Betriebszustand kann der Frequenzumrichter beispielsweise in den Freilaufmodus geschaltet werden kann, ohne dass zu befürchten wäre, dass hohe Rückspeiseströme auftreten werden. Befinden sich die Ströme innerhalb des Bereichs S2, so erzeugt die Elektromaschine ein nur geringes Bremsdrehmoment. Auch dieser Betriebszustand kann als weniger kritisch gewertet werden und kann daher gesondert behandelt werden. Bei einer Vollpolmaschine kann anhand der d-Komponente (i_{d}) abgelesen werden, ob die Elektromaschine in der Feldschwächung betrieben wird. Ist der negative Strom i_{d} sehr hoch, kann davon ausgegangen werden, dass die betreffende Elektromaschine im Feldschwächungsbetrieb arbeitet. Die Bestimmung, ob die Stromkomponenten i_{d}, i_{q} innerhalb des S2-Bereich im Kurzschlussfall liegen, kann anhand des Verhältnisses der Stromkomponenten i_{d}, i_{q} zueinander oder des Winkels des aus den beiden Stromkomponenten i_{d}, i_{q} resultierenden Stromzeigers erfolgen. Die Stromaufteilung der Komponentenströme i_{d}, i_{q} kann mit den Stromwinkel-/ Stromverhältnisschwellen S1_mot, 27 bzw. S1_gen, 28 verglichen werden, um feststellen, ob die Stromkomponenten innerhalb des S1-Bereichs liegen. Die Stromwinkel-/Stromverhältnisschwellen S1_mot, 27 und S1_gen, 28 können sowohl durch einen festen Winkel oder ein festes Verhältnis, als auch durch variable Winkel/Verhältnisse (z.B. kennlinienbasiert) bestimmt werden. Der S1-Bereich ist der gesamte Bereich zwischen den Kurven 27 und 28.

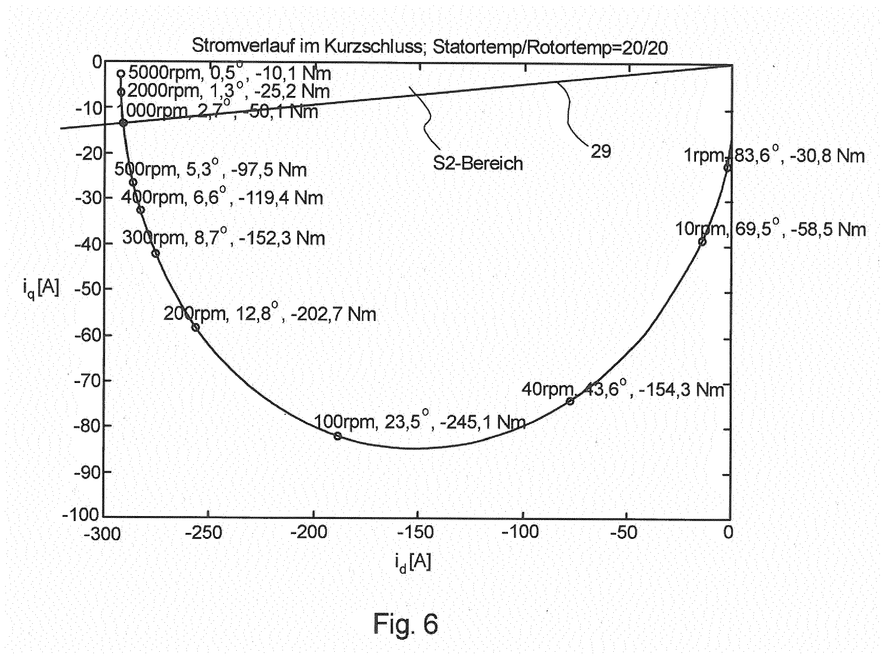

Fig. 6 zeigt einen Kurvenverlauf einer Synchronmaschine im Kurzschlussmodus bei einer Statortemperatur von 20° Celsius und einer Rotortemperatur von 20° Celsius.

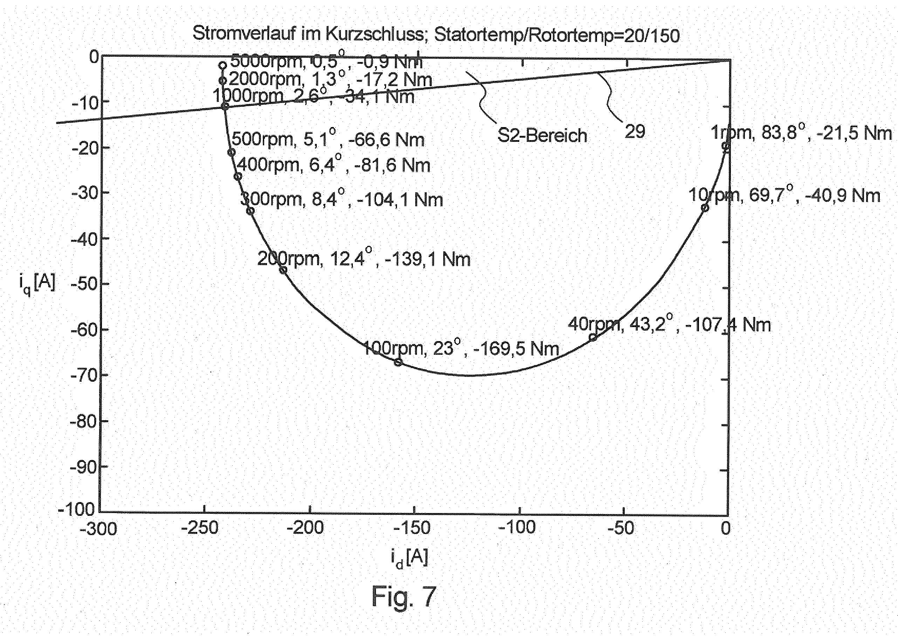

Fig. 7 zeigt einen Kurvenverlauf einer Synchronmaschine im Kurzschlussmodus bei einer Statortemperatur von 20° Celsius und einer Rotortemperatur von 150° Celsius.

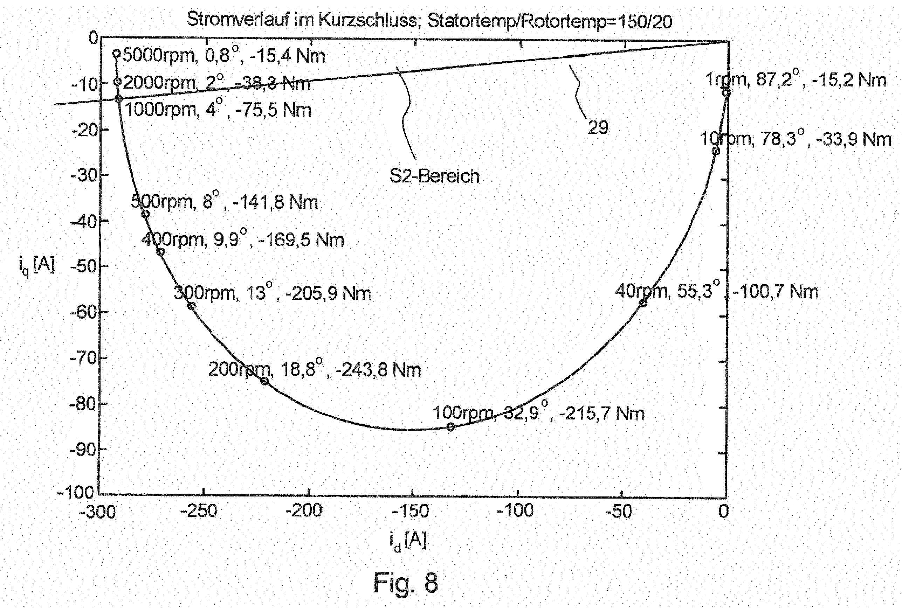

Fig. 8 zeigt einen Kurvenverlauf einer Synchronmaschine im Kurzschlussmodus bei einer Statortemperatur von 150° Celsius und einer Rotortemperatur von 20° Celsius.

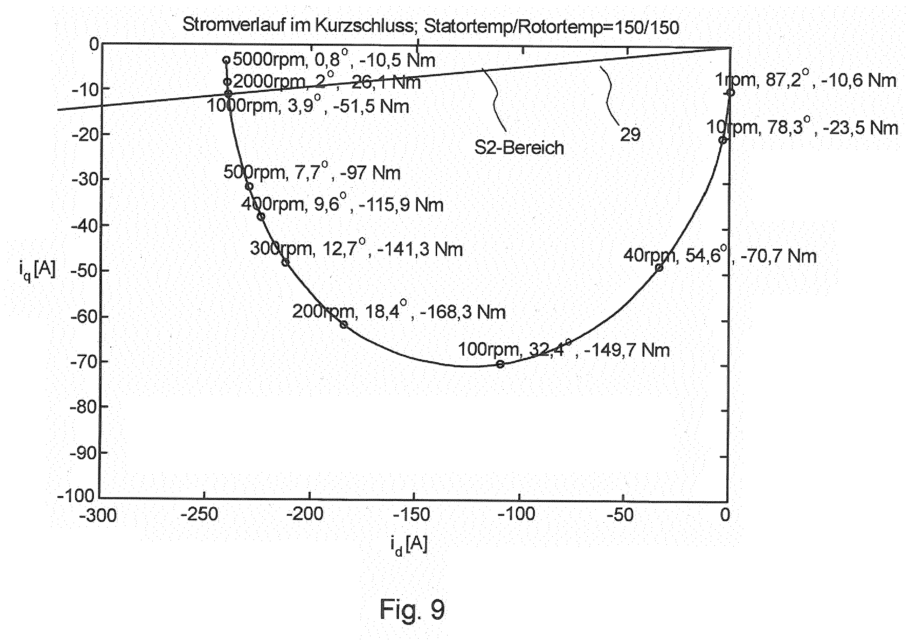

Fig. 9 zeigt einen Kurvenverlauf einer Synchronmaschine im Kurzschlussmodus bei einer Statortemperatur von 150° Celsius und einer Rotortemperatur von 150° Celsius.

Bei sämtlichen Figuren 6, 7, 8, 9 kann ein Bereich S2 festgestellt werden, bei dem ein nur kleines Bremsdrehmoment erzeugt wird. Das Auftreten dieses Betriebszustands mit einem geringen Bremsdrehmoment ist unabhängig von einer Variation der Statur-und/oder Rotortemperatur. Die S2-Schwelle 29 ist so festzulegen, dass das maximal zulässige Bremsmoment nicht überschritten wird.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Spannungsquelle
- 2: Spannungszwischenkreis
- 3: Zwischenkreiskondensator
- 4: Leistungsschalter Highside
- 5: Freilaufdiode Highside
- 6: Freilaufdiode Lowside
- 7: Leistungsschalter Lowside
- 8: permanentmagneterregte Synchronmaschine
- 9: Mittel zur Messung der Position/Lage des Rotors
- 10: Übergangsbereich
- 11: betragsmässiges Drehzahlmaximum
- 12: Strommessung
- 13: Steuereinheit zur Ansteuerung des Frequenzumrichters
- 14: Überwachungseinheit
- 15: Störungs- und Fehlererkennung
- 16: Externes Störungs-/Fehlersignal
- 17: Störung detektiert
- 18: Stromfluss außerhalb des Toleranzbereichs T1?
- 19: Steuersignale aktiv ?
- 20: Stromwinkel/Stromverhältnis ist innerhalb des S1-Bereichs?
- 21: Einschalten des Freischaltmodus durch die Überwachungseinheit
- 22: Stromfluss außerhalb des Toleranzbereichs T1?
- 23: Einschalten des Kurzschlussmodus durch die Überwachungseinheit
- 24: Stromwinkel/Stromverhältnis ist außerhalb des S2-Bereichs?
- 25: Kennlinie K_mot (motorischer Betrieb)
- 26: Kennlinie K_gen (generatorischer Betrieb)
- 27: linearisierte Kennlinie, S1_mot
- 28: linearisierte Kennlinie, S1_gen
- 29: Kurve
- 30: Kurve
- i_{d}: d-Strom im läuferorientierten Koordinatensystem
- i_{q}: q-Strom im läuferorientierten Koordinatensystem
- i_{U}: Strom im Phasenstrang U
- i_{V}: Strom im Phasenstrang V
- i_{W}: Strom im Phasenstrang W
- S1: Bereich in der Transformationsebene, innerhalb dessen Feldschwächung vorliegt
- S2: Bereich in der Transformationsebene, bei dem ein nur geringes Bremsdrehmoment im Kurzschlussfall erzeugt wird
- T1: Bereich in der Transformationsebene, innerhalb dessen nur geringe Ströme auftreten
- U: Phasenstrangspannung
- V: Phasenstrangspannung
- W: Phasenstrangspannung
- GND: Bezugspotential zur Gleichspannung
- PSM: permanentmagneterregte Synchronmaschine
- U_{BAT}: Gleichspannung

## Patentansprüche

1. Verfahren zur Ansteuerung eines mehrphasigen Frequenzumrichters zur Ansteuerung einer Elektromaschine (8), wobei die Elektromaschine (8) als Traktionsantrieb eines Fahrzeugs geeignet ist, wobei der Frequenzumrichter Leistungsschalterpaare umfasst, mit jeweils einem ersten Leistungsschalter (4) und einem zweiten Leistungsschalter (7), die in Serie geschaltet sind, wobei der erste Leistungsschalter (4) mit einer Gleichspannung (U_{BAT}) verbunden ist und der zweite Leistungsschalter (7) mit einem Bezugspotential (GND) der Gleichspannung (U_{BAT}) verbunden ist, wobei der jeweilige Knotenpunkt des ersten mit dem zweiten Leistungsschalter (4, 7) mit dem jeweiligen Phasenstrang der Elektromaschine (8) verbunden ist, umfassend die Schritte:
- feststellen, ob ein Störfall vorliegt (17),
- falls ein Störfall vorliegt und ein Steuersignal an dem ersten und/oder an dem zweiten Leistungsschalter nicht aktiv ist dann bewerten, ob der Frequenzumrichter in den Kurzschlussmodus oder in den Freilaufmodus zu schalten ist anhand der Phasenstrangströme (i_{U}, i_{V}, i_{W}) und anhand der Lage des Rotors der Elektromaschine (8);
- mathematische Transformation der Phasenstrangströme (i_{U}, i_{V}, i_{W}) in ein zweidimensionales Koordinatensystem mit orthogonal aufeinander stehenden Stromkomponenten (i_{d}, i_{q})
- falls die Stromkomponenten (i_{d}, i_{q}) innerhalb eines Toleranzbereichs (T1) liegen (18), dann überführen des Frequenzumrichters in einen Freilaufmodus (21),
- falls die Stromkomponenten (i_{d}, i_{q}) außerhalb des Toleranzbereichs (T1) liegen (18) und falls das Steuersignal aktiv ist (19) und falls die Stromkomponenten außerhalb eines ersten Bereichs (S1) liegen (20), dann überführen des Frequenzumrichters in den Freilaufmodus (21).
- falls die Stromkomponenten (i_{d}, i_{q}) außerhalb des Toleranzbereichs (T1) liegen (18) und falls das Steuersignal nicht aktiv ist (19), dann überführen des Frequenzumrichters in den Kurzschlussmodus (23),
- falls die Stromkomponenten außerhalb des Toleranzbereichs (T1) liegen (18) und falls das Steuersignal aktiv ist (19) und falls die Stromkomponenten innerhalb eines ersten Bereichs (S1) liegen (20), dann überführen des Frequenzumrichters in den Kurzschlussmodus (23).

2. Verfahren nach Anspruch 1, wobei das Koordinatensystem ein läuferorientiertes Koordinatensystem ist.

3. Verfahren nach einem der vorhergehenden Ansprüche, wobei der Toleranzbereich (T1) derjenige Bereich ist, in dem für die Stromkomponenten (i_{d}, iq) gilt: i_{q}² + i_{d}² = erster Wert, und/oder wobei der erste Bereich (S1) derjenige Bereich ist, in dem für die Stromkomponenten (i_{d}, iq) gilt: i_{d} < 0 und i_{q} <=| zweiter Wert • i_{d}| und i_{q} >= dritter Wert • i_{d} und/oder wobei der erste Wert, der zweite Wert und der dritte Wert beliebige gleiche oder unterschiedliche numerische Werte sind und/oder wobei die Bestimmung, ob die Stromkomponenten (i_{d}, i_{q}) innerhalb des ersten Bereichs (S1) liegen durch Berechnung eines Stromwinkel der Stromkomponenten (i_{d}, i_{q}) und/oder durch die Berechnung eines Stromverhältnisses der Stromkomponenten (i_{d}, i_{q}) erfolgt.

4. Verfahren nach einem der vorhergehenden Ansprüche, ferner umfassend die Schritte:
- falls im Freilaufmodus die Stromkomponenten (i_{d}, i_{q}) außerhalb des Toleranzbereichs (T1) liegen, dann überführen des Frequenzumrichters in den Kurzschlussmodus,
- falls im Freilaufmodus die Stromkomponenten (i_{d}, i_{q}) innerhalb des Toleranzbereichs (T1) liegen, dann belassen des Frequenzumrichters im Freilaufmodus.

5. Verfahren nach einem der vorhergehenden Ansprüche, wobei:
- falls im Kurzschlussmodus die Stromkomponenten (i_{d}, i_{q}) innerhalb eines zweiten Bereichs (S2) liegen, dann belassen des Frequenzumrichters im Kurzschlussmodus,
- falls im Kurzschlussmodus die Stromkomponenten (i_{d}, i_{q}) außerhalb des zweiten Bereichs (S2) liegen, dann überführen des Frequenzumrichters in den Freischaltmodus.

6. Verfahren nach Anspruch 5 , wobei der zweite Bereich (S2) derjenige Bereich ist, in dem für die Stromkomponenten (i_{d}, i_{q}) gilt: i_{d} < 0 und i_{q} <= 0 und i_{q} >= vierter Wert • i_{d} wobei der vierte Wert ein beliebiger numerischer Wert ist und/oder wobei der zweite Bereich (S2) durch Berechnung eines Stromwinkels der Stromkomponenten (i_{d}, i_{q}) und/oder durch die Berechnung eines Stromverhältnisses der Stromkomponenten (i_{d}, i_{q}) erfolgt.

7. Verfahren nach einem der vorhergehenden Ansprüche, wobei im Freilaufmodus sämtliche ersten und sämtliche zweiten Leistungsschalter (4, 7) geöffnet sind.

8. Verfahren nach einem der vorhergehenden Ansprüche, wobei im Kurzschlussmodus sämtliche ersten Leistungsschalter (4) geöffnet sind und sämtliche zweiten Leistungsschalter (7) geschlossen sind oder wobei sämtliche ersten Leistungsschalter (4) geschlossen sind und sämtliche zweiten Leistungsschalter (7) geöffnet sind oder wobei jeweils ein Leistungsschalter je Phase kurzgeschlossen ist.

9. Verfahren nach einem der vorhergehenden Ansprüche, wobei eine Überwachungseinheit den Frequenzumrichter in den Freilaufmodus und/oder in den Kurzschlussmodus überführt.

10. Steuerungseinheit, derart ausgelegt ist, um ein Verfahren nach einem der vorhergehenden Ansprüche auszuführen.

11. Fahrzeug, aufweisend eine Steuerungseinheit nach Anspruch 10.

## Claims

1. Method for actuating a multiphase frequency converter for the purpose of actuating an electric machine (8), wherein the electric machine (8) is suitable as a traction drive for a vehicle, wherein the frequency converter comprises power switch pairs, in each case comprising a first power switch (4) and a second power switch (7), which are connected in series, wherein the first power switch (4) is connected to a DC voltage (U_{BAT}) and the second power switch (7) is connected to a reference-ground potential (GND) of the DC voltage (U_{BAT}), wherein the respective node point of the first to the second power switch (4, 7) is connected to the respective phase winding of the electric machine (8), comprising the following steps:
- determining whether a fault is present (17),
- if a fault is present and a control signal at the first and/or at the second power switch is not active, evaluating whether the frequency converter should be switched to the short-circuit mode or to the freewheeling mode on the basis of the phase winding currents (i_{U}, i_{V}, i_{W}) and on the basis of the position of the rotor of the electric machine (8) ;
- mathematically transforming the phase winding currents (i_{U}, i_{V}, i_{W}) to a two-dimensional coordinate system having current components (i_{d}, i_{q}) orthogonal to one another
- if the current components (i_{d}, i_{q}) are within a tolerance range (T1) (18), transferring the frequency converter to a freewheeling mode (21),
- if the current components (i_{d}, i_{q}) are outside the tolerance range (T1) (18) and if the control signal is active (19) and if the current components are outside a first range (S1) (20), transferring the frequency converter to the freewheeling mode (21),
- if the current components (i_{d}, i_{q}) are outside the tolerance range (T1) (18) and if the control signal is not active (19), transferring the frequency converter to the short-circuit mode (23),
- if the current components are outside the tolerance range (T1) (18) and if the control signal is active (19) and if the current components are within a first range (S1) (20), transferring the frequency converter to the short-circuit mode (23).

2. Method according to Claim 1, wherein the coordinate system is a rotor-oriented coordinate system.

3. Method according to either of the preceding claims, wherein the tolerance range (T1) is that range in which, for the current components (i_{d}, i_{q}), the following holds true: i_{q}² + i_{d}² = first value, and/or wherein the first range (S1) is that range in which, for the current components (i_{d}, i_{q}), the following holds true: i_{d} < 0 and i_{q} ≤ | second value · i_{d}| and i_{q} ≥ third value · i_{d} and/or wherein the first value, the second value and the third value are arbitrary identical or different numerical values and/or wherein the determination of whether the current components (i_{d}, i_{q}) are within the first range (S1) is carried out by calculating a current angle of the current components (i_{d}, i_{q}) and/or by calculating a current ratio of the current components (i_{d}, i_{q}).

4. Method according to one of the preceding claims, further comprising the following steps:
- if, in the freewheeling mode, the current components (i_{d}, i_{q}) are outside the tolerance range (T1), transferring the frequency converter to the short-circuit mode,
- if, in the freewheeling mode, the current components (i_{d}, i_{q}) are within the tolerance range (T1), leaving the frequency converter in the freewheeling mode.

5. Method according to one of the preceding claims, wherein:
- if, in the short-circuit mode, the current components (i_{d}, i_{q}) are within a second range (S2), leaving the frequency converter in the short-circuit mode,
- if, in the short-circuit mode, the current components (i_{d}, i_{q}) are outside the second range (S2), transferring the frequency converter to the disconnect mode.

6. Method according to Claim 5, wherein the second range (S2) is that range in which, for the current components (i_{d}, i_{q}), the following holds true: i_{d} < 0 and i_{q} ≤ 0 and i_{q} ≥ fourth values · i_{d}, wherein the fourth value is an arbitrary numerical value and/or wherein the second range (S2) is carried out by calculating a current angle of the current components (i_{d}, i_{q}) and/or by calculating a current ratio of the current components (i_{d}, i_{q}).

7. Method according to one of the preceding claims, wherein, in the freewheeling mode, all of the first and all of the second power switches (4, 7) are open.

8. Method according to one of the preceding claims, wherein, in the short-circuit mode, all of the first power switches (4) are open and all of the second power switches (7) are closed or wherein all of the first power switches (4) are closed and all of the second power switches (7) are open or wherein, in each case, one power switch per phase is shorted.

9. Method according to one of the preceding claims, wherein a monitoring unit transfers the frequency converter to the freewheeling mode and/or to the short-circuit mode.

10. Control unit, is configured to execute a method according to one of the preceding claims.

11. Vehicle, having a control unit according to Claim 10.

## Revendications

1. Procédé de commande d'un convertisseur de fréquence multiphasé servant à commander une machine électrique (8), la machine électrique (8) étant conçue comme un mécanisme d'entraînement en traction d'un véhicule, le convertisseur de fréquence comprenant des paires de commutateurs de puissance composées respectivement d'un premier commutateur de puissance (4) et d'un deuxième commutateur de puissance (7) qui sont branchés en série, le premier commutateur de puissance (4) étant relié à une tension continue (U_{BAT}) et le deuxième commutateur de puissance (7) à un potentiel de référence (GND) de la tension continue (U_{BAT}), le point nodal correspondant du premier avec le deuxième commutateur de puissance (4, 7) étant relié à la branche de phase respective de la machine électrique (8), comprenant les étapes suivante :
- constatation de la présence ou non d'une situation de défaut (17),
- dans le cas où il existe une situation de défaut et qu'un signal de commande n'est pas actif au niveau du premier et/ou du deuxième commutateur de puissance, alors évaluation si le convertisseur de fréquence doit être commuté en mode de court-circuit ou en mode de régime libre au moyen des courants de branche de phase (i_{U}, i_{V}, i_{W}) et au moyen de la position du rotor de la machine électrique (8) ;
- transformation mathématique des courants de branche de phase (i_{U}, i_{V}, i_{W}) en un système de coordonnées bidimensionnel avec des composantes de courant (i_{d}, i_{q}) disposées de manière orthogonale l'une sur l'autre ;
- si les composantes de courant (i_{d}, i_{q}) se trouvent à l'intérieur d'une plage de tolérance (T1) (18), alors passage du convertisseur de fréquence dans un mode de régime libre (21),
- si les composantes de courant (i_{d}, i_{q}) se trouvent à l'extérieur de la plage de tolérance (T1) (18) et si le signal de commande est actif (19) et si les composantes de courant se trouvent à l'extérieur d'une première plage (S1) (20), alors passage du convertisseur de fréquence dans le mode de régime libre (21),
- si les composantes de courant (i_{d}, i_{q}) se trouvent à l'extérieur de la plage de tolérance (T1) (18) et si le signal de commande n'est pas actif (19), alors passage du convertisseur de fréquence dans le mode de court-circuit (23),
- si les composantes de courant se trouvent à l'extérieur de la plage de tolérance (T1) (18) et si le signal de commande est actif (19) et si les composantes de courant se trouvent à l'intérieur d'une première plage (S1) (20), alors passage du convertisseur de fréquence dans le mode de court-circuit (23).

2. Procédé selon la revendication 1, le système de coordonnées étant un système de coordonnées orienté sur le rotor.

3. Procédé selon l'une des revendications précédentes, la plage de tolérances (T1) étant la plage dans laquelle la règle suivante s'applique pour les composantes de courant (i_{d}, i_{q}) : i_{q}² + i_{d}² = première valeur, et/ou la première plage (S1) étant la plage dans laquelle la règle suivante s'applique pour les composantes de courant (i_{d}, i_{q}) : i_{d} < 0 et i_{q} <= |deuxième valeur * i_{d}| et i_{q} >= troisième valeur * i_{d} et/ou la première valeur, la deuxième valeur et la troisième valeur étant des valeurs numériques quelconques égales ou différentes et/ou la détermination de la présence des composantes de courant (i_{d}, i_{q}) à l'intérieur de la première plage (S1) étant effectuée par le calcul d'un angle de courant des composantes de courant (i_{d}, i_{q}) et/ou par le calcul d'un rapport de courant des composantes de courant (i_{d}, i_{q}).

4. Procédé selon l'une des revendications précédentes, comprenant en outre les étapes suivante :
- si, en mode de régime libre, les composantes de courant (i_{d}, i_{q}) se trouvent à l'extérieur de la plage de tolérance (T1), alors passage du convertisseur de fréquence dans le mode de court-circuit,
- si, en mode de régime libre, les composantes de courant (i_{d}, i_{q}) se trouvent à l'intérieur de la plage de tolérance (T1), alors maintien du convertisseur de fréquence dans le mode de régime libre.

5. Procédé selon l'une des revendications précédentes, dans lequel :
- si, en mode de court-circuit, les composantes de courant (i_{d}, i_{q}) se trouvent à l'intérieur d'une deuxième plage (S2), alors maintien du convertisseur de fréquence dans le mode de court-circuit,
- si, en mode de court-circuit, les composantes de courant (i_{d}, i_{q}) se trouvent à l'extérieur de la deuxième plage (S2), alors passage du convertisseur de fréquence dans le mode de déconnexion.

6. Procédé selon la revendication 5, la deuxième plage (S2) étant la plage dans laquelle la règle suivante s'applique pour les composantes de courant (i_{d}, i_{q}) : i_{d} < 0 et i_{q} <= 0 et i_{q} >= quatrième valeur * i_{d}, la quatrième valeur étant une valeur numérique quelconque et/ou la deuxième plage (S2) étant effectuée par le calcul d'un angle de courant des composantes de courant (i_{d}, i_{q}) et/ou par le calcul d'un rapport de courant des composantes de courant (i_{d}, i_{q}).

7. Procédé selon l'une des revendications précédentes, tous les premiers et tous les deuxièmes commutateurs de puissance (4, 7) étant ouverts dans le mode de régime libre.

8. Procédé selon l'une des revendications précédentes, dans lequel, dans le mode de court-circuit, tous les premiers commutateurs de puissance (4) sont ouverts et tous les deuxièmes commutateurs de puissance (7) sont fermés, ou alors tous les premiers commutateurs de puissance (4) sont fermés et tous les deuxièmes commutateurs de puissance (7) sont ouverts, ou alors un commutateur de puissance par phase est à chaque fois court-circuité.

9. Procédé selon l'une des revendications précédentes, une unité de surveillance faisant passer le convertisseur de puissance dans le mode de régime libre et/ou dans le mode de court-circuit.

10. Unité de commande, est conçue pour mettre en oeuvre un procédé selon l'une des revendications précédentes.

11. Véhicule, possédant une unité de commande selon la revendication 10.
